# EUROPÄISCHE PATENTSCHRIFT

(11) **EP 3 625 157 B1**
(45) Veröffentlichungstag und Bekanntmachung des Hinweises auf die Patenterteilung: **05.07.2023**
(21) Anmeldenummer: 18725221.8
(22) Anmeldetag: 17.05.2018
(51) Int. Cl.: B65G 47/91, B27M 1/08, B65G 43/02, B25B 11/00, B65H 3/08

(54) **HANDHABUNGSEINRICHTUNG ZUM HANDHABEN VON ZUMINDEST ABSCHNITTSWEISE EBENEN GÜTERN, VERFAHREN ZUM BETREIBEN EINER DERARTIGEN HANDHABUNGSEINRICHTUNG**
HANDLING DEVICE FOR HANDLING ARTICLES THAT ARE FLAT AT LEAST IN SOME SECTIONS AND METHOD FOR OPERATING SUCH A HANDLING DEVICE
DISPOSITIF DE MANIPULATION DESTINÉ À MANIPULER DES MARCHANDISES PLATES AU MOINS DANS CERTAINES ZONES, ET PROCÉDÉ DESTINÉ À FAIRE FONCTIONNER UN TEL DISPOSITIF DE MANIPULATION

(30) Priorität: 19.05.2017 DE 102017110998
(43) Veröffentlichungstag der Anmeldung: 25.03.2020
(73) Patentinhaber: HOMAG Plattenaufteiltechnik GmbH, 75365 Calw (DE)
(72) Erfinder: KRETEK, David, 72213 Altensteig (DE); ERBELE, Matthias, 72218 Wildberg (DE); GALAMBOS, Christian, 72189 Voehringen (DE)
(74) Vertreter: DREISS Patentanwälte PartG mbB
(86) Internationale Anmeldenummer: PCT/EP2018/062861
(87) Internationale Veröffentlichungsnummer: WO 2018/210993

(56) Entgegenhaltungen:
- EP-A1- 1 254 854
- EP-A1- 1 529 606
- EP-A2- 1 132 322
- EP-A2- 1 775 243
- WO-A1-2006/024347
- WO-A1-2010/038315
- DE-A1-102007 031 760
- FR-A1- 2 639 335
- FR-A1- 2 755 119
- US-A- 1 870 694
- US-A- 5 201 560
- US-A1- 2002 131 853
- US-A1- 2004 094 979
- US-A1- 2010 040 450
- US-A1- 2016 221 187
- US-B1- 9 205 558

## Beschreibung

Die Erfindung betrifft eine Handhabungseinrichtung zum Handhaben von zumindest abschnittsweise ebenen Gütern, insbesondere eine Saugtraverse, eine Plattenaufteilanlage und ein Verfahren zum Betreiben einer derartigen Handhabungseinrichtung.

DE000010140248B4 beschreibt eine Handhabungseinrichtung mit Greifern, bei der jeder Greifer mit einer Einrichtung zum Steuern eines Unterdrucks, einem Sensor zur Erfassung von Zustandsdaten bezügliche des Greifers und einer Auswerteelektronik zur Auswertung des Unterdrucks und der Zustandsdaten ausgestattet ist.

DE102010040686B3 offenbart, bezüglich einer Überwachung eines Saugers, dass ein Betriebszustand eines Saugers durch ein elektrisches Messverfahren analysiert wird. US 9 205 558 B1 offenbart ein Verfahren zum Handhaben von zumindest abschnittsweise ebenen Gütern mittels einer Handhabungseinrichtung nach dem Oberbegriff des Anspruchs 1.

Aufgabe der Erfindung ist es eine Handhabungseinrichtung, insbesondere eine Saugtraverse mit demgegenüber verbesserter Funktion und ein verbessertes Verfahren zum Betreiben einer solchen anzugeben.

Dies wird durch eine Vorrichtung und ein Verfahren nach den unabhängigen Ansprüchen erreicht.

Bezüglich der Handhabungseinrichtung, insbesondere einer Saugtraverse, mit Saugern, die zum Greifen von Werkstücken in einer Ebene angeordnet sind, sind die Sauger ausgebildet, ein Werkstück mittels Unterdruck zu greifen, wobei die Sauger über Saugleitungen mit einer Saugeinrichtung zum Steuern des Unterdrucks verbindbar sind, wobei die Sauger durch Öffnen oder Verschließen wenigstens einer Saugleitung einzeln oder in Gruppen über Schalteinrichtungen wahlweise mit der Saugeinrichtung verbindbar oder von der Saugeinrichtung trennbar sind, und wobei eine Steuereinrichtung ausgebildet ist, eine oder mehrere der Schalteinrichtungen zum wahlweisen Öffnen oder Verschließen abhängig von einem vorgebbaren Betriebsmodus der Handhabungseinrichtung anzusteuern. Nach der Erfindung ist die Steuereinrichtung ausgebildet, zumindest die Saugeinrichtung und die Schalteinrichtung in einem der folgenden Verfahren anzusteuern.

Bezüglich des Verfahrens werden eine oder mehrere der Schalteinrichtungen zum wahlweisen Öffnen oder Verschließen abhängig von einem vorgebbaren Betriebsmodus der Handhabungseinrichtung angesteuert.

Nach der Erfindung werden in einem sequentiellen Ansaugvorgang einzelne Sauger, die über die Schalteinrichtungen von der Saugeinrichtung getrennt sind, einzeln nacheinander über Schalteinrichtungen mit der Saugeinrichtung verbunden, bis eine Gesamtheit der Sauger der Saugtraverse das Werkstück ansaugt.

Nach der Erfindung werden in einem sequentiellen Ansaugvorgang einzelne Saugergruppen, die über die Schalteinrichtungen von der Saugeinrichtung getrennt sind, einzeln nacheinander über Schalteinrichtungen mit der Saugeinrichtung verbunden, bis eine Gesamtheit oder eine vor der Werkstückgröße abhängige maximale Anzahl der Sauger der Saugtraverse das Werkstück ansaugt.

Vorteilhafterweise umfasst eine Saugergruppe eine vorgegebene Mehrzahl einzelner Sauger und unterschiedliche Saugergruppen umfassen verschiedene einzelne Sauger.

Durch dieses Verfahren wird im sequentiellen Ansaugvorgang ein hoher Vakuumvolumenstrom für einzelne Sauger oder Saugergruppen erzeugt, der dafür sorgt, dass Dichtlippen der Sauger an Strukturen der zu saugenden Oberflächen des Werkstücks angeschmiegt werden und so besser abdichten, als wenn alle Sauger gleichzeitig mit der Saugeinrichtung verbunden werden.

Nach der Erfindung wird ein Werkstück von einer Gesamtheit oder eine vor der Werkstückgröße abhängige maximale Anzahl der Sauger bei einem ersten Ansaugvorgang angesaugt, und anschließend überprüft, ob ein momentaner Unterdruckwert einen Soll-Unterdruckwert unterschreitet, wobei ein zweiter Ansaugvorgang dann ausgeführt wird, wenn der momentane Unterdruckwert den Soll-Unterdruckwert unterschreitet, wobei der zweite Ansaugvorgang den sequentiellen Ansaugvorgang umfasst.

Dieses Verfahren sorgt dafür, dass der zweite Ansaugvorgang in dem ein hoher Vakuumvolumenstrom dafür sorgt, dass die Dichtlippen an die Strukturen der zu saugenden Oberflächen angeschmiegt werden, um diese besser abzudichten, nur ausgeführt wird, wenn beim ersten gemeinsamen Ansaugvorgang der Gesamtheit aller Sauger kein ausreichend hoher Unterdruck erreicht wird.

Dadurch wird das Verfahren zum prozesssicheren Ansaugen von strukturiertem Material einsetzbar.

Vorteilhafterweise wird in einem Positioniervorgang wenigstens ein einzeln ansteuerbarer Sauger, der nicht mit der Unterdruckeinheit verbunden ist, einzeln mit der Unterdruckeinheit verbunden, ein Unterdruck-Unterschied zwischen einem ersten Unterdruckwert und einem zweiten Unterdruckwert bestimmt, wobei der erste Unterdruckwert erfasst wird, wenn der wenigstens eine einzeln ansteuerbarer Sauger nicht mit der Unterdruckeinheit verbunden ist, und wobei der zweite Unterdruckwert erfasst wird, wenn der wenigstens eine einzeln ansteuerbare Sauger mit der Unterdruckeinheit verbunden ist.

Durch Zuschaltung der einzelnen Sauger wird festgestellt, wenn ein vergleichsweise großer Unterdruckverlust bei einem Sauger auftritt. In diesem Fall wird auf eine nicht homogen strukturierte Oberfläche an einem der Sauger geschlossen.

Vorzugsweise wird ein einzelner Sauger anschließend abhängig von dem Unterdruck-Unterschied von der Unterdruckeinheit getrennt oder die Verbindung aufrechterhalten.

Dadurch werden betroffene Sauger anschließend entweder nicht mehr angesaugt oder weiter angesaugt. Dies ermöglicht ein Abschalten von stark strukturierten Saugerstellen durch Erkennung von Unterdruckabfall.

Vorzugsweise werden wenn der Unterdruck-Unterschied einen Schwellwert überschreitet alle Sauger von der Unterdruckeinheit getrennt, die Handhabungseinrichtung von einer ersten Position bezüglich des Werkstücks in eine zweite Position des Werkstücks bewegt, die von der ersten Position verschieden ist, und der Positioniervorgang wiederholt, bis ein erfasster Unterdruckwert einen Soll-Unterdruckwert erreicht.

Dadurch wird das Verfahren zum prozesssicheren Ansaugen von nicht homogen strukturiertem Material, z.B. Massivholzoberfläche mit Rissen oder Echtholzfurnier, einsetzbar.

Vorzugsweise umfasst der Positioniervorgang wenigstens einen Rüttelvorgang, in dem die Handhabungseinrichtung bezüglich des Werkstücks bewegt wird, während die Sauger das Werkstück ansaugen. Dadurch erfolgt eine Verbesserung der Anschmiegung der Dichtlippen an eine Oberflächenstruktur des Werkstücks.

Vorzugsweise wird eine Werkstückposition bezüglich der Handhabungseinrichtung mittels eines mechanischen, optischen oder elektrischen Sensors, insbesondere eines Lichttasters, Ultraschallsensors oder eines mechanischen Grenztasters, erfasst, und eine Saugerpositionierung auf dem Werkstück abhängig von der ermittelten Werkstückposition angepasst.

Vorzugsweise wird eine Werkstückposition bezüglich der Handhabungseinrichtung mittels einer sensorischen Erfassung des Unterdrucks erfasst, wobei ein Korrekturverfahren bei unzureichendem oder keinem Unterdruck ausgeführt wird.

Bei fehlerhafter Positionierung eines oder mehrerer der Sauger ist die Dichtlippe entweder nicht ausreichend an die Oberflächenstruktur angeschmiegt, oder der Sauger befindet sich in einem Bereich, in dem der Sauger keinen Kontakt zur Oberflächenstruktur hat oder der Kontakt nur unzureichend ist.

Bei korrekter Werkstückposition bezüglich der Handhabungseinrichtung sind die Dichtlippen ausreichend angeschmiegt und jeder Sauger hat ausreichend Kontakt zur Oberflächenstruktur. Der erfasste Unterdruck weist einen vorgegebenen Wert auf, wenn die Positionierung richtig ist. Eine fehlerhafte Positionierung wird bei einer Abweichung von dem vorgegebenen Wert erkannt.

Vorzugsweise wird ein erfasster Unterdruckwert mit einem Referenz-Unterdruck-Wert verglichen und abhängig vom Ergebnis des Vergleichs ein Zustand des Saugers ermittelt, wobei der Referenz-Unterdruck-Wert entweder ein vorgegebener Soll-Wert für ein vorgegebenes Material des Werkstücks oder ein während des Betriebs der Handhabungseinrichtung mit dem Werkstück ermittelter Soll-Wert ist. Dadurch wird ein Verschleiß eines Saugers erkennbar, der zu einem gegenüber dem Referenz-Unterdruck-Wert veränderten Unterdruckwert führt. Dies ist durch Vergleich eines erfassten Unterdruckwerts eines definierten Materials während der Produktion mit einem vorgegebenen und/oder selbsterlernten Referenzwert für das definierte Material möglich.

Vorzugsweise ist die Handhabungseinrichtung bezüglich einer Referenzmessstelle bewegbar, deren Oberfläche durch mindestens einen Sauger greifbar ist, wobei die Handhabungseinrichtung in eine Referenzposition bezüglich der Referenzmessstelle bewegt wird um mit wenigstens einem Sauger die Referenzmessstelle zu greifen, wobei wenigstens ein Sauger angesteuert wird, in der Referenzposition die Referenzmessstelle zu greifen, wobei in der Referenzposition wenigstens ein Unterdruckwert erfasst wird, wobei der in der Referenzposition erfasste Unterdruckwert mit einem Referenz-Unterdruck-Wert verglichen wird, wobei abhängig vom Ergebnis des Vergleichs ein Zustand des Saugers ermittelt wird, und wobei der Referenz-Unterdruck-Wert entweder ein vorgegebener Soll-Wert oder ein während des Betriebs der Handhabungseinrichtung ermittelter Soll-Wert ist. Ein Saugerverschleiß ist somit zuverlässig unabhängig vom Werkstück erkennbar. Werden eine oder mehrere Referenzmessstellen in einer Maschine geschaffen, die die Handhabungseinrichtung bewegt, können über eine Prozesskette hinweg die Unterdrücke von ein oder mehreren Saugern der Handhabungseinrichtung abgefragt werden und mit in einer Datenbank hinterlegten materialabhängigen Referenzwerten verglichen werden. Weichen die Ist-Werte von den Referenzwerten in einem bestimmten Maß ab, wird auf den Saugerverschleiß geschlossen.

Vorzugsweise ist die Handhabungseinrichtung an einem ersten Ende eines Armes bezüglich eines zweiten Endes des Armes mit vorgebbarer Geschwindigkeit beweglich angeordnet, wobei die Geschwindigkeit zur Bewegung der Handhabungseinrichtung bezüglich des zweiten Endes des Armes abhängig von einem erfassten Unterdruckwert vorgegeben wird. Beispielsweise werden in einer Sägemaschine während der Produktion Unterdruckwerte, die bei einem Transport von zu sägenden Platten mittels der Handhabungseinrichtung auftreten, durch Sensorik aufgenommen und in einer speicherprogrammierbaren Steuerung verarbeitet. Dabei wird ein erreichter Unterdruck ständig überwacht. Sinkt der erreichte Unterdruck während eines Transportauftrags unter einen berechneten Schwellwert, wird automatisch die Geschwindigkeit und Dynamik beispielsweise auf eine parametrisierbare Bahngeschwindigkeit reduziert, sodass ein prozesssicherer Transport gewährleistet wird. Parameter zur Berechnung des berechneten Schwellwerts sind beispielsweise Materialdimensionen, d.h. Breite, Höhe, Dicke der Platte, die momentan verwendet wird, Oberflächenstruktur der Platte, die momentan verwendet wird, Dichte der Platte, die momentan verwendet wird. Diese Parameter sind beispielsweise in einer Ablaufsteuerung hinterlegt, mit der die Speicherprogrammierbare Steuerung arbeitet.

Vorzugsweise wird zu einem definierten Zeitpunkt ein automatisierter Selbsttest der Handhabungseinrichtung durchführt, in dem die Handhabungseinrichtung insbesondere mit Hilfe einer Referenzmessstelle automatisiert auf mechanische oder elektrische Fehler geprüft wird, wobei die dafür notwendigen Bewegungen und Ansteuerungen des Arms und der Handhabungseinrichtung mittels einer Aktorik sowie eine Auswertung einer dafür eingesetzten Sensorik vollautomatisch stattfinden, indem ein Selbsttest durchgeführt wird und über rückgeführte Messwerte die Abweichung eines Ist-Zustands von einem Soll-Zustand überprüft wird.

Vorzugsweise wird die Abweichung innerhalb eines definierten Toleranzfensters automatisch durch Ansteuerung der Aktorik korrigiert.

Liegt dabei die Abweichung in einem parametrisierten Toleranzfenster, wird eine automatische Korrektur auf den Soll-Zustand durchgeführt, sodass die höchste Prozesssicherheit wieder erreicht wird. Übersteigt der Ist-Zustand das Toleranzfenster, werden Handlungsmaßnahmen beispielsweise durch eine Benutzerschnittstelle angezeigt.

Dadurch erfolgt eine Ermittlung von Fehlern im System. Fehler betreffen insbesondere eine Verschiebung der Handhabungseinrichtung durch Störsituationen (Kollision), elektrische Fehler in der Erfassung der Position im Messsystem.

Vorzugsweise erfolgt eine Positionierung der Handhabungseinrichtung an einer vorgegeben Referenzmessstelle und eine Erfassung eines Unterschieds zwischen dem Ist-Zustand und dem Soll-Zustand mit Hilfe mechanischer oder elektrischer Sensoren. Dies optimiert die Prozesssicherheit weiter. Dafür geeignete Sensoren sind insbesondere Lichttaster, Ultraschallsensoren, mechanische Grenztaster, oder Unterdrucksensoren.

Weitere vorteilhafte Ausgestaltungen ergeben sich aus der folgenden Beschreibung und der Zeichnung. In der Zeichnung zeigt:
- Fig. 1: schematisch eine Handhabungseinrichtung,
- Fig. 2: schematisch Ausschnitte aus einem sequentiellen Ansaugvorgang,
- Fig. 3 und 4: schematisch Betriebsmodi für stark strukturierte Oberflächen eines Werkstücks,
- Fig. 5 bis 9: schematisch Betriebsmodi in denen die Handhabungseinrichtung bezüglich einer Soll-Position bewegt wird,
- Fig. 10 bis 12: schematisch Betriebsmodi in denen die Handhabungseinrichtung bezüglich einer Referenzmessstelle bewegt wird

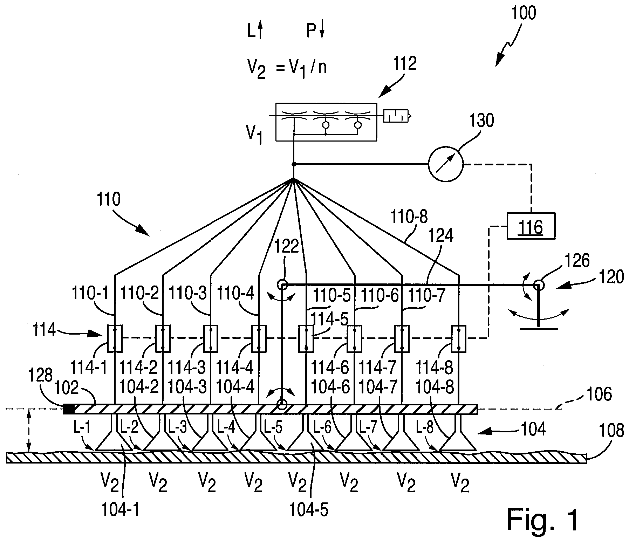

Die in Figur 1 dargestellte Vorrichtung 100 zum Bearbeiten von zumindest abschnittsweise ebenen Gütern umfasst eine Handhabungseinrichtung 102. Im Beispiel handelt es sich bei der Vorrichtung 100 um eine Plattenaufteilanlage. Die Vorrichtung 100 kann alternativ beispielsweise ein Lager oder eine CNC-Fräsmaschine oder eine andere Maschine für die Bearbeitung plattenförmiger Werkstücke sein. Im Beispiel handelt es sich bei der Handhabungseinrichtung 102 um eine Saugtraverse. Die Handhabungseinrichtung 102 kann alternativ beispielsweise ein Schlauchheber, ein Coilheber oder ein sonstiger Vakuumheber sein.

An der Handhabungseinrichtung 102 sind Sauger 104 zum Greifen von Werkstücken oder anderen Lastgegenständen in einer Ebene 106 angeordnet.

Die Sauger 104 sind ausgebildet, ein Werkstück 108 mittels Unterdruck zu greifen. Das Werkstück 108 weist dazu eine zumindest abschnittsweise ebene Fläche auf, die ein Greifen durch wenigstens einen der Sauger 104 mittels Unterdruck ermöglicht.

Die Sauger 104 sind über Saugleitungen 110 mit einer Saugeinrichtung 112 zum Steuern des Unterdrucks verbindbar. Die Saugeinrichtung 112 erzeugt den Unterdruck beispielsweise über die Saugleitungen 110 an jedem der Sauger 104, wenn diese mit der Saugeinrichtung 112 verbunden sind, und die Saugeinrichtung 112 in den Saugleitungen 110 Unterdruck erzeugt.

Die Handhabungseinrichtung 102 weist im Beispiel n = 8 Sauger 104-1, ..., 104-8 auf, die über n = 8 Saugleitungen 110 mit der Saugeinrichtung 112 verbindbar sind. Es können auch mehr oder weniger Sauger 104 vorgesehen sein. Wenn die Saugeinrichtung 112 einen ersten Volumenstrom V1 erzeugt, wird an den Saugern 104-1, ..., 104-8 jeweils ein zweiter Volumenstrom V2 = V1 / 8 erzeugt, wenn alle Sauger 104 mit der Saugeinrichtung 112 verbunden sind. Aufgrund von Leckage kann an einzelnen oder allen 8 Saugern 104 ein Leckagevolumenstrom L1, ..., L8 auftreten. Daraus ergibt sich ein insgesamt resultierender Leckagevolumenstrom L = L1 + ... + L. Aufgrund des ersten Volumenstroms V1 und des resultierenden Leckagevolumenstroms L stellt sich ein tatsächlicher Unterdruck P an den 8 Saugern 104 ein.

Eine Mehrzahl der Sauger 104 ist durch Öffnen oder Verschließen wenigstens einer Saugleitung 110 einzeln über Schalteinrichtungen 114 wahlweise mit der Saugeinrichtung 112 verbindbar oder von der Saugeinrichtung 112 trennbar. Die Saugleitungen 110-1, ..., 110-8 verbinden im Beispiel jeweils einen der Sauger 104-1, ..., 104-8 mit einer der Schalteinrichtungen 114-1, ..., 114-8. Jede der Schalteinrichtungen 114-1, ..., 114-8 ist im Beispiel mit einer der Saugleitungen 110-1, ..., 110-8 mit der Saugeinrichtung 112 verbunden. Alternativ dazu kann jeweils eine Untergruppe von Saugern mit einer Schalteinrichtung verbunden sein. Die im Folgenden beschriebenen Betriebsmodi betreffen dann diese Untergruppen und deren Schalteinrichtungen.

In Figur 1 ist ein erster Betriebsmodus dargestellt, in dem alle Schalteinrichtungen 114 offen sind.

Die Vorrichtung 100 weist eine Steuereinrichtung 116 auf, die ausgebildet ist, eine oder mehrere der Schalteinrichtungen 114 zum wahlweisen Öffnen oder Verschließen abhängig von einem vorgebbaren Betriebsmodus der Handhabungseinrichtung 102 anzusteuern. Die Steuereinrichtung 116 ist dazu über gestrichelt dargestellte Signalleitungen mit den Schalteinrichtungen 114 verbunden.

Die Vorrichtung 100 kann zudem eine Aktorikvorrichtung 120 zum Bewegen der Handhabungseinrichtung 102 aufweisen.

Die Handhabungseinrichtung 102 ist im Beispiel an einem ersten Ende 122 eines Armes 124 bezüglich eines zweiten Endes 126 des Armes 124 beweglich angeordnet.

Eine Ansteuerung des Arms 124 und der Handhabungseinrichtung 102 ist mittels der Aktorik 120 insbesondere durch die Steuereinrichtung 116 möglich.

Die Vorrichtung 100 kann zudem Sensorik 128 zum Erfassen von Zuständen der Vorrichtung 100 oder der Handhabungseinrichtung 102 aufweisen.

Eine Auswertung der Sensorik 128 ist über eine Rückführung von Messwerten von der Sensorik 128 zur Steuereinrichtung 116 möglich. Dadurch kann ein Ist-Zustand festgestellt und eine Abweichung von einem Soll-Zustand überprüft werden. Dazu ist die Sensorik 128 über Signalleitungen oder drahtlos mit der Steuereinrichtung 116 verbunden, was aus Gründen der Übersicht in Fig. 1 nicht dargestellt ist.

Die Sensorik 128 umfasst mechanische oder elektrische Sensoren, Insbesondere kann wenigstens ein Lichttaster, wenigstens ein Ultraschallsensor oder wenigstens ein mechanischer Grenztaster vorgesehen sein, der eine Saugerpositionierung, d.h. eine momentane Positionierung wenigstens eines Saugers 104 bezüglich des Werkstücks 108 erfasst.

Zudem ist wenigstens ein Unterdrucksensor 130 zur Erfassung eines momentanen Unterdrucks P in den Saugleitungen 110 an der Saugeinrichtung 112 angeordnet sein. Vorzugsweise ist nur ein Unterdrucksensor 130 zur Erfassung des Unterdrucks in einer Mehrzahl der Saugleitungen 110 angeordnet.

Die Steuereinrichtung 116 ist ausgebildet, die Vorrichtung 100, insbesondere zumindest die Saugeinrichtung 112 und die Schalteinrichtung 114 in einem der im Folgenden beschriebenen Verfahren anzusteuern.

Im Betrieb der Handhabungseinrichtung 102 mit den Saugern 104, die zum Greifen von Werkstücken in der Ebene 106 angeordnet sind, soll mit wenigstens einem Sauger 104 das Werkstück 108 mittels des Unterdrucks P gegriffen werden. Der Unterdruck P wird an wenigstens einem der Sauger 104 über wenigstens eine Saugleitung 110 von der Saugeinrichtung 112 erzeugt. Der Unterdruck P wird dabei für eine Mehrzahl der Sauger 104 durch Öffnen oder Verschließen der Saugleitungen 110 einzeln über die Schalteinrichtungen 114 verteilt. Der wenigstens eine Sauger 104 oder eine Gruppe von Saugern 104 werden wahlweise mit der Saugeinrichtung 112 verbunden, oder von der Saugeinrichtung 112 getrennt.

Der sich momentan einstellende Unterdruck P wird beispielsweise von dem Unterdrucksensor 130 erfasst, der an der Saugeinrichtung 112 angeordnet ist.

Eine oder mehrere der Schalteinrichtungen 114 werden zum wahlweisen Öffnen oder Verschließen abhängig von einem vorgebbaren Betriebsmodus der Handhabungseinrichtung 102 angesteuert.

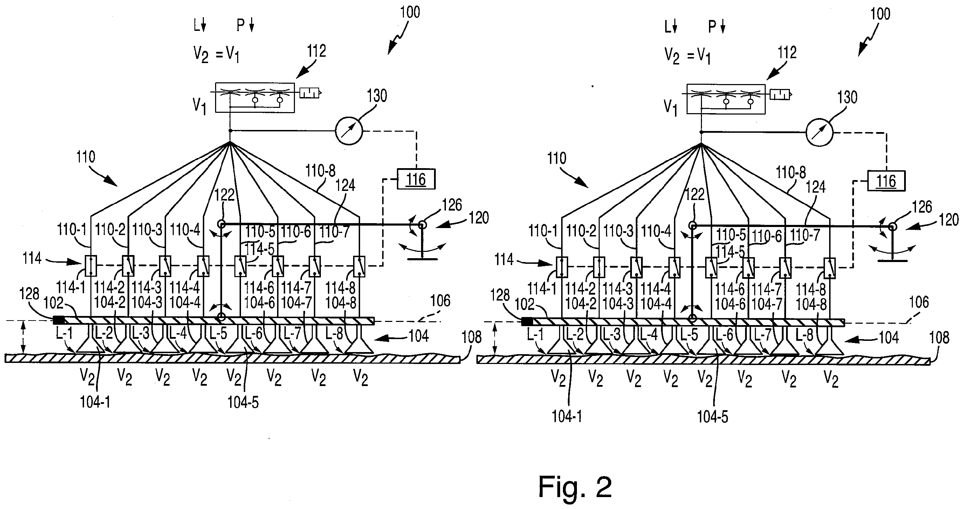

Beispielhafte Betriebsmodi werden im Folgenden anhand der Figuren 2 bis 12 beschrieben. Auch die im Folgenden beschriebenen Vorgänge oder Verfahren sind beispielsweise als vorgebbare Betriebsmodi implementiert. Elemente und deren Bezugszeichen, die bereits anhand der Figur 1 beschrieben wurden, und die dieselbe oder eine vergleichbare Funktion haben, werden in den weiteren Figuren und der folgenden Beschreibung mit denselben Bezugszeichen bezeichnet, und nicht erneut beschrieben.

Figur 2 zeigt schematisch einen Ausschnitt aus einem sequentiellen Ansaugvorgang in dem einzelne Sauger 104 oder Gruppen von Saugern 104, die über die Schalteinrichtungen 114 von der Saugeinrichtung 112 getrennt sind, einzeln nacheinander über Schalteinrichtungen 114 mit der Saugeinrichtung 112 verbunden werden, bis eine Gesamtheit der Sauger 104 der Handhabungseinrichtung 102 das Werkstück 108 ansaugt. Genauer ist in der linken Abbildung der Figur 2 ein erster Schritt des sequentiellen Ansaugvorgangs dargestellt, in dem nur ein erster Sauger 104-1 mit der Saugeinrichtung 112 verbunden ist. Dazu ist eine erste Schalteinrichtung 114-1, in einer ersten Saugleitung 110-1, die den ersten Sauger 104-1 mit der Saugeinrichtung 112 verbindet, geöffnet. Die übrigen Sauger 104-2, ..., 104-n sind von der Saugeinrichtung 112 getrennt. Dazu sind die übrigen Schalteinrichtungen 114-2, ..., 114-n, die in den übrigen Saugleitungen 110-2, ..., 110-n angeordnet sind, geschlossen.

In der rechten Abbildung der Figur 2 ist ein zweiter Schritt des sequentiellen Ansaugvorgangs dargestellt, in dem der erste Sauger 104-1 und der zweite Sauger 104-2 mit der Saugeinrichtung 112 verbunden sind. Dazu ist neben der ersten Schalteinrichtung 114-1 auch eine zweite Schalteinrichtung 110-2 in einer zweiten Saugleitung 110-2, die den zweiten Sauger 104-2 mit der Saugeinrichtung 112 verbindet, geöffnet. Die übrigen Sauger 104-3, ..., 104-n sind von der Saugeinrichtung 112 getrennt. Dazu sind die übrigen Schalteinrichtungen 114-3, ..., 114-n, die in den übrigen Saugleitungen 110-3, ..., 110-n angeordnet sind, geschlossen.

Der weitere sequentielle Ansaugvorgang schließt die übrigen Schalteinrichtungen 114-3, ..., 114-n nacheinander bis alle Sauger 104-1, ..., 104-n mit der Saugeinrichtung 112 verbunden sind.

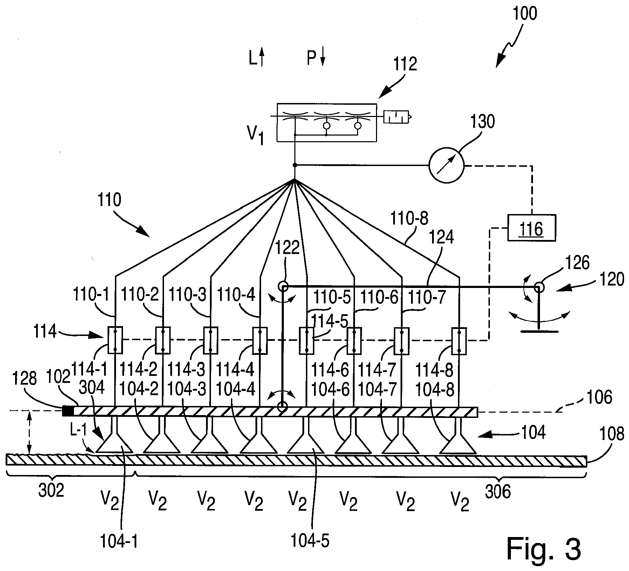

Figur 3 zeigt schematisch einen ersten Zustand in dem ein Leckagevolumenstrom L nur an dem ersten Sauger 104-1 auftritt. In Figur 3 ist der erste Sauger 104-1 bei einer stark strukturierten Oberfläche des Werkstücks 108 an einer derart unebenen Stelle 302 angeordnet, dass eine Dichtlippe 304 des ersten Saugers 104-1 nicht mehr ausreichend anschmiegt. An den übrigen Saugern 104-2, ..., 104-n tritt kein Leckagevolumenstrom auf. Dieser Zustand wird zum einen durch den sequentiellen Ansaugvorgang detektierbar, da sich der Leckagevolumentsrom L bei sequentiellem Öffnen der ersten Schalteinrichtung 114-1 bereits einstellt und sich beim Öffnen der weiteren Schalteinrichtungen 114-2 bis 114-8 nicht weiter erhöht. Zum anderen ist eines der im Folgenden beschriebenen Korrekturverfahren möglich, um die Sauger 104 und insbesondere den ersten Sauger 104-1 an weniger stark strukturierten Bereichen 306 des Werkstücks 108 anzuordnen.

Der sequentielle Ansaugvorgang kann auch vorsehen, dass einzelne Saugergruppen, die über die Schalteinrichtungen 114 von der Saugeinrichtung 112 getrennt sind, einzeln nacheinander über die Schalteinrichtungen 114 mit der Saugeinrichtung 112 verbunden werden, bis eine Gesamtheit der Sauger 104 der Handhabungseinrichtung 102 das Werkstück 108 ansaugt. Eine Saugergruppe umfasst eine vorgegebene Mehrzahl einzelner Sauger 104. Unterschiedliche Saugergruppen umfassen verschiedene einzelne Sauger 104.

Optional kann vorgesehen sein, dass bei einem ersten Ansaugvorgang das Werkstück 108 von einer Gesamtheit der Sauger 104 angesaugt wird, und anschließend überprüft wird, ob ein momentaner Unterdruckwert einen Soll-Unterdruckwert unterschreitet. Ein zweiter Ansaugvorgang wird dann ausgeführt, wenn der momentane Unterdruckwert den Soll-Unterdruckwert unterschreitet, wobei der zweite Ansaugvorgang den sequentiellen Ansaugvorgang für einzelne Sauger 104 oder Gruppen von Saugern 104 umfasst.

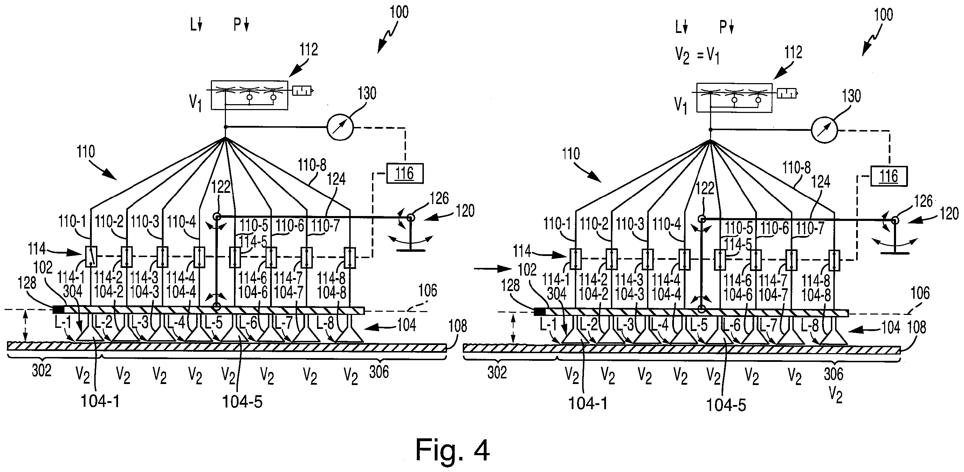

Figur 4 zeigt schematisch Ausschnitte in einem Positioniervorgang bei der erste Sauger 104-1, der zunächst, wie in der linken Abbildung von Figur 4 dargestellt, nicht mit der Unterdruckeinheit 112 verbunden ist. Anschließend wird der erste Sauger 104-1 mit der Unterdruckeinheit 112 verbunden. Zudem wird ein Unterdruck-Unterschied zwischen einem ersten Unterdruckwert und einem zweiten Unterdruckwert bestimmt. Der erste Unterdruckwert wird erfasst, wenn der erste Sauger 104-1 nicht mit der Unterdruckeinheit 112 verbunden ist. Der zweite Unterdruckwert wird erfasst, wenn der erste Sauger 104-1 mit der Saugeinrichtung 112 verbunden ist. Im Beispiel sind alle übrigen Sauger 104-2, ..., 104-n mit der Unterdruckeinheit verbunden. Das Verfahren kann auch vorsehen, dass alle übrigen Sauger 104-2, ..., 104-n zunächst nicht mit der Saugeinrichtung 112 verbunden sind.

Anschließend ist optional vorgesehen, dass ein einzelner Sauger 104 abhängig von dem Unterdruck-Unterschied von der Unterdruckeinheit 112 getrennt oder die Verbindung aufrechterhalten wird.

Wenn der Unterdruck-Unterschied zu groß ist, ist einer der Sauger 104, der als letztes mit der Unterdruckeinheit 112 verbunden wurde, möglicherweise nicht richtig positioniert, oder die Dichtlippe 304 dieses Saugers 104 ist nicht vollständig an eine Oberfläche des Werkstücks 108 angeschmiegt. Dadurch entsteht an diesem Sauger 104 Leckage, durch die der momentane Unterdruckwert niedriger ist, als dies bei leckagefreiem Ansaugen der Fall wäre. Bevorzugt wird der betroffene Sauger 104 in diesem Fall von der Saugeinrichtung 112 getrennt, wodurch die Leckage vermieden wird. Alternativ dazu wird die Handhabungseinrichtung 102, wie in der rechten Abbildung von Figur 4 dargestellt, bezüglich des Werkstücks 108 versetzt. Vorzugsweise wird die Handhabungseinrichtung 108 parallel zur Ebene 106 um die Breite des ersten Saugers 104-1 versetzt oder so, dass der erste Sauger 104-1 dann die Position des zweiten Saugers 104-2 einnimmt. Dadurch wird der stark strukturierte Bereich 302 vermieden.

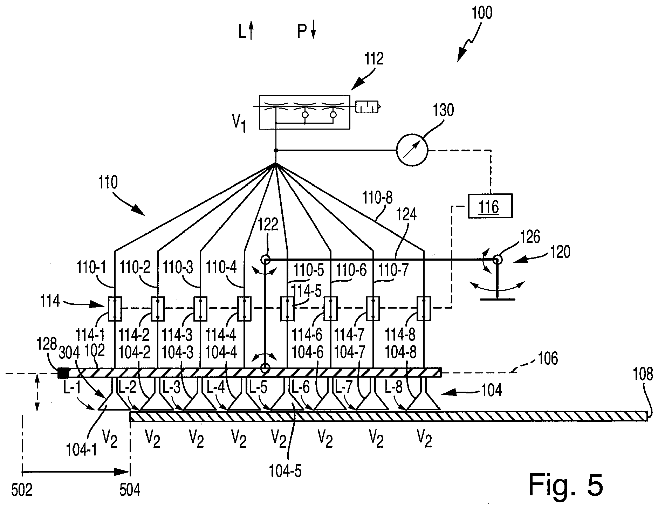

In Figur 5 ist die Handhabungseinrichtung 102 derart bezüglich des Werkstücks 108 versetzt, dass das Werkstück 108 nicht in seiner Soll-Position 502 bezüglich des Werkstücks 108 angeordnet ist. Genauer ist der erste Sauger 104-1 ohne Kontakt zum Werkstück 108 angeordnet.

Diese Werkstückposition d. h. eine Ist-Position 504 des Werkstücks 108 bezüglich der Handhabungseinrichtung 102 wird beispielsweise durch den sequenziellen Ansaugvorgang als Lagefehler des Werkstücks 108 oder Positionierungsfehler der Handhabungseinrichtung 102 erkannt.

Eine derartige Werkstückposition bezüglich der Handhabungseinrichtung 102 wird optional mittels eines mechanischen, optischen oder elektrischen Sensors, insbesondere eines Lichttasters, Ultraschallsensors oder eines mechanischen Grenztasters, erfasst.

Je nach verwendetem Sensor kann eine fehlerhafte Saugerpositionierung bereits erfasst werden bevor ein Sauger 104 das Werkstück 108 erreicht oder sobald wenigstens einer der Sauger 104 das Werkstück 108 erreicht.

In beiden Fällen kann die Saugerpositionierung auf dem Werkstück 108 abhängig von der ermittelten Werkstückposition nach einem der im Folgenden beschriebenen Korrekturverfahren angepasst werden.

Eine Werkstückposition bezüglich der Handhabungseinrichtung 102 wird beispielsweise mittels einer sensorischen Erfassung des Unterdrucks erfasst, wobei das Korrekturverfahren ausgeführt wird, wenn der sensorisch erfasste Unterdruck einen Korrekturschwellwert unterschreitet. Der erfasste Unterdruck signalisiert die Notwendigkeit eines Korrekturverfahrens.

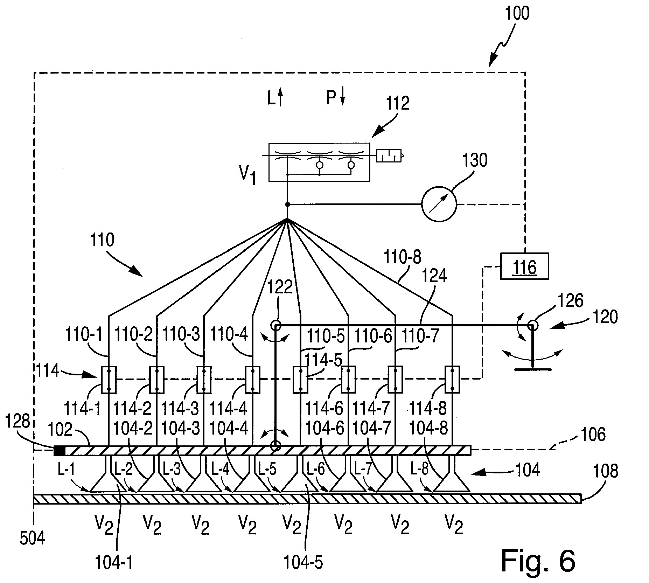

In Fig. 6 ist ein korrigierter Zustand beispielhaft dargestellt.

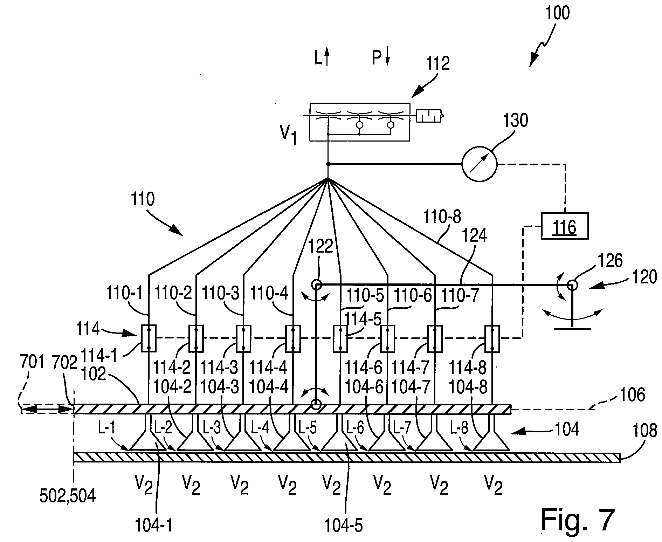

Anschließend wird die Handhabungseinrichtung 102 von einer ersten Position 701 bezüglich des Werkstücks 108 in eine zweite Position 702 bezüglich des Werkstücks 108 bewegt, die von der ersten Position 701 verschieden ist. Dies ist schematisch in Figur 7 dargestellt. Der Positioniervorgang wird erforderlichenfalls wiederholt, bis ein erfasster Unterdruckwert einen Soll-Unterdruckwert erreicht. Dies stellt einen automatischen Positionskorrekturmechanismus dar.

Der Positioniervorgang kann wenigstens einen Rüttelvorgang umfassen, in dem die Handhabungseinrichtung 102 bezüglich des Werkstücks 108 bewegt, beispielsweise gerüttelt, wird, während die Sauger 104 das Werkstück 108 ansaugen. Dieser Rüttelvorgang wird beispielsweise ausgeführt bevor der automatische Postitionskorrekturmechanismus beginnt. In einer weiteren bevorzugten Ausführungsform kann ein solcher Rüttelvorgang nach jedem Bewegungsschritt des Positionskorrekturmechanismus durchgeführt werden.

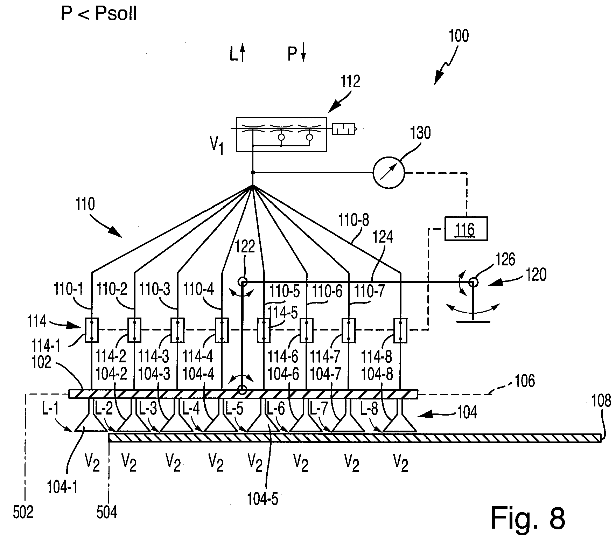

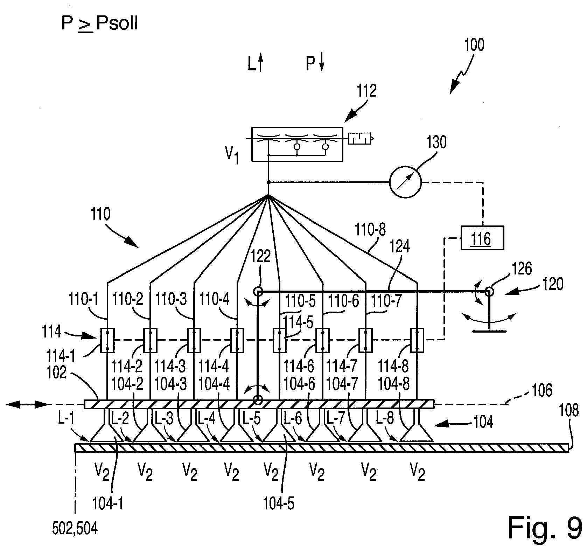

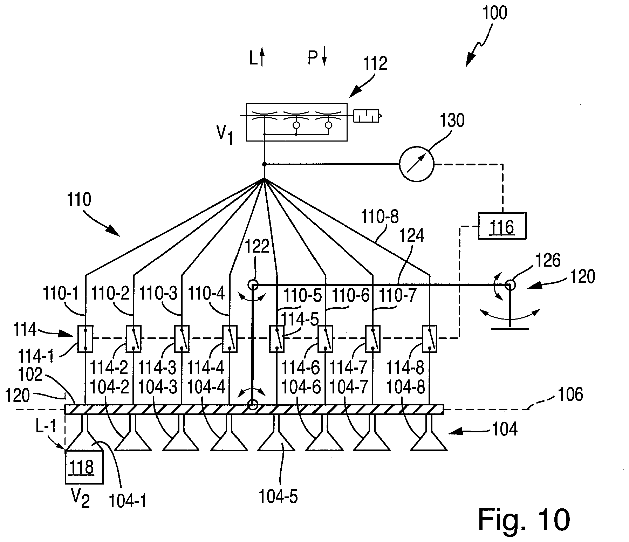

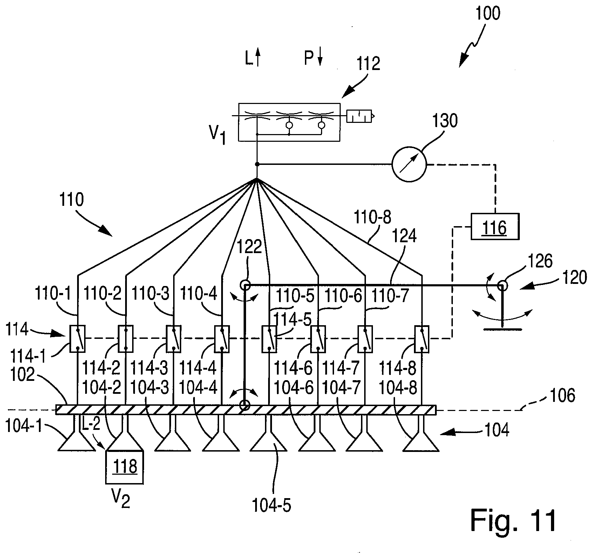

Ein erfasster Unterdruckwert P wird beispielsweise wie schematisch in Figur 8 und 9 dargestellt mit einem Referenz-Unterdruck-Wert PSoll verglichen. In Figur 8 wird der Referenz-Unterdruck-Wert PSoll vom erfassten Unterdruckwert P nicht erreicht, da der erste Sauger 104-1 ohne Kontakt zum Werkstück 108 ist. In Figur 9 ist der Zustand dargestellt, in dem der Referenz-Unterdruck-Wert PSoll vom erfassten Unterdruckwert P erreicht wird, da alle Sauger 104 richtig positioniert sind. Abhängig vom Ergebnis des Vergleichs wird ein Zustand des Saugers 102 ermittelt. Der Referenz-Unterdruck-Wert PSoll ist beispielsweise ein vorgegebener Soll-Wert für ein vorgegebenes Material des Werkstücks 108. Der Soll-Wert kann auch während des Betriebs der Handhabungseinrichtung 102, beispielsweise während einer Handhabung dieses Werkstücks 108 durch Messung des Unterdrucks ermittelt werden. Diese Messung wird bei bekanntem Material durchgeführt um so einen Soll-Wert für das vorgegebene Material zu lernen. Wenn der Soll-Wert nicht erreicht wird, liegt möglicherweise eine fehlerhafte Positionierung oder ein Verschleiß vor. Ist dies festgestellt so wird eine Aktion eingeleitet (z.B. Unterbrechen des Prozesses, Fehlermeldung, Wartungsanweisung, Fehlerbehebungsanweisung) Die Handhabungseinrichtung 102 kann, wie es im Beispiel von Figur 10 und Figur 11 dargestellt ist, bezüglich einer Referenzmessstelle 118 bewegbar sein, deren Oberfläche durch mindestens einen Sauger 104 greifbar ist. Die Referenzmessstelle 118 besteht beispielsweise aus einer ebenen Oberfläche mit einer vordefinierten Rauigkeit ohne Kratzer oder sonstige Beschädigungen. Die vordefinierte Rauigkeit sollte etwa der Rauigkeit der Oberflächen der zu handhabenden Werkstücke entsprechen, um eine optimale Vergleichsmöglichkeit zu haben. In einem weiteren Betriebsmodus wird die Handhabungseinrichtung 102 in eine Referenzposition bezüglich der Referenzmessstelle 118 bewegt, um wie in Figur 10 dargestellt mit dem ersten Sauger 104-1 die Referenzmessstelle 118 zu greifen. Der erste Sauger 104-1 wird angesteuert, in der Referenzposition die Referenzmessstelle 118 zu greifen. Der resultierende Unterdruck P wird erfasst und bevorzugt in der Steuereinrichtung 116 zwischengespeichert.

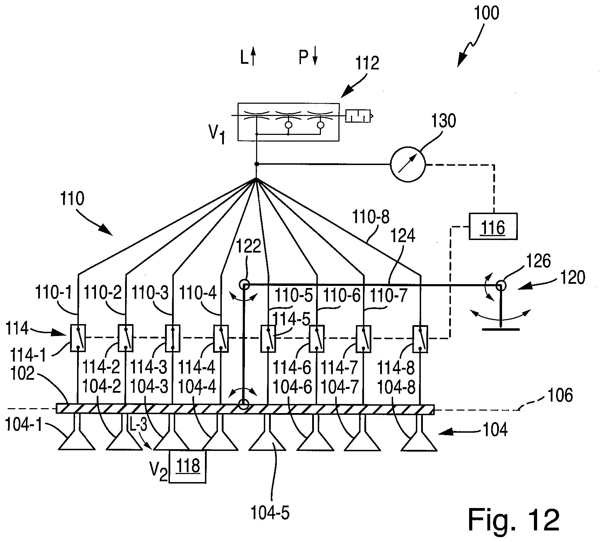

Anschließend wird die Handhabungseinrichtung 102 bezüglich der Referenzmessstelle 118 bewegt, um wie in Figur 11 dargestellt mit dem zweiten Sauger 104-2 die Referenzmessstelle 118 zu greifen. Der zweite Sauger 104-2 wird angesteuert, in die Referenzmessstelle 118 zu greifen. Der resultierende Unterdruck P wird ebenfalls erfasst und bevorzugt in der Steuereinrichtung 116 zwischengespeichert. Diese erfassten Unterdruckwerte werden mit einem Referenz-Unterdruck-Wert verglichen. Abhängig vom Ergebnis des Vergleichs wird ein Zustand des ersten Saugers 104-1 und/oder des zweiten Saugers 104-2 ermittelt. Der Referenz-Unterdruck-Wert ist entweder ein vorgegebener Soll-Wert oder ein in Vorfeld an der Referenzmessstelle 118 ermittelter Soll-Wert Wenn der Referenz-Unterdruck-Wert für den ersten Sauger 104-1 erreicht wird, ist der erste Sauger 104-1 in Ordnung. Wenn der Referenz-Unterdruck-Wert für den zweiten Sauger 104-2 erreicht wird, ist der zweite Sauger 104-2 in Ordnung. Die anderen Sauger 104-3, ..., 104-n werden beispielsweise ebenso überprüft. In Figur 12 ist eine fehlerhafte Positionierung dargestellt, in der eine Leckage an einem dritten Sauger 104-3 auftritt. Dies ist erkennbar, da der Referenz-Unterdruck-Wert nicht erreicht wird. Die Position der Handhabungseinrichtung 102 wird während des Referenzmessvorganges an der Referenzmessstelle 118 mit nicht dargestellten Sensoren überprüft.

Die Handhabungseinrichtung 102 kann an einem ersten Ende 122 eines Armes 124 bezüglich eines zweiten Endes 126 des Armes 124 mit vorgebbarer Geschwindigkeit beweglich angeordnet sein. In einem weiteren Betriebsmodus wird die Geschwindigkeit zur Bewegung der Handhabungseinrichtung 102 bezüglich des zweiten Endes 126 des Armes 124 abhängig von einem erfassten Unterdruckwert vorgegeben.

Zu einem definierten Zeitpunkt kann ein automatisierter Selbsttest der Handhabungseinrichtung 102 durchgeführt werden. In dem automatisierten Selbsttest wird die Handhabungseinrichtung 102 insbesondere mit Hilfe der Referenzmessstelle automatisiert auf mechanische oder elektrische Fehler geprüft wird, wobei die dafür notwendigen Bewegungen und Ansteuerungen des Arms 124 und der Handhabungseinrichtung 102 mittels der Aktorik sowie durch die Auswertung der dafür eingesetzten Sensorik vollautomatisch stattfinden. Dazu wird ein Selbsttest durchgeführt und über rückgeführte Messwerte die Abweichung eines Ist-Zustands von einem Soll-Zustand überprüft.

Sofern eine Abweichung innerhalb eines definierten Toleranzfensters liegt, kann vorgesehen sein, diese Abweichung automatisch durch Ansteuerung der Aktorikvorrichtung 120 zu korrigieren.

Eine Positionierung der Handhabungseinrichtung 102 kann an der vorgegeben Referenzmessstelle erfolgen, wobei eine Erfassung eines Unterschieds zwischen dem Ist-Zustand und dem Soll-Zustand mit Hilfe der mechanischen oder elektrischen Sensoren erfolgt.

## Patentansprüche

1. Verfahren zum Handhaben von zumindest abschnittsweise ebenen Gütern mittels einer Handhabungseinrichtung (102), insbesondere einer Saugtraverse, mit Saugern (104), die zum Greifen von Werkstücken in einer Ebene (106) angeordnet sind, wobei die Sauger (104) ausgebildet sind, ein Werkstück (108) mittels Unterdruck zu greifen, wobei die Sauger (104) über Saugleitungen (110) mit einer Saugeinrichtung (112) zum Steuern des Unterdrucks verbindbar sind, wobei die Sauger (104) durch Öffnen oder Verschließen wenigstens einer Saugleitung (110) einzeln oder in Gruppen über Schalteinrichtungen (114) wahlweise mit der Saugeinrichtung (112) verbindbar oder von der Saugeinrichtung (112) trennbar sind, wobei eine oder mehrere der Schalteinrichtungen (114) zum wahlweisen Öffnen oder Verschließen abhängig von einem vorgebbaren Betriebsmodus der Handhabungseinrichtung (102) angesteuert werden, wobei in einem sequentiellen Ansaugvorgang einzelne Sauger (104) oder Saugergruppen, die über die Schalteinrichtungen (114) von der Saugeinrichtung (112) getrennt sind, einzeln nacheinander über Schalteinrichtungen (114) mit der Saugeinrichtung (112) verbunden werden, bis eine Gesamtheit oder eine vor der Werkstückgröße abhängige maximale Anzahl der Sauger (102) der Handhabungseinrichtung (102) das Werkstück (108) ansaugt, **dadurch gekennzeichnet, dass** ein Werkstück (108) von einer Gesamtheit oder eine vor der Werkstückgröße abhängigen maximalen Anzahl der Sauger (104) bei einem ersten Ansaugvorgang angesaugt wird, und anschließend überprüft, ob ein momentaner Unterdruckwert einen Soll-Unterdruckwert unterschreitet, wobei ein zweiter Ansaugvorgang dann ausgeführt wird, wenn der momentane Unterdruckwert den Soll-Unterdruckwert unterschreitet, wobei der zweite Ansaugvorgang den sequentiellen Ansaugvorgang umfasst.

2. Verfahren nach Anspruch 1, **dadurch gekennzeichnet, dass** in dem sequentiellen Ansaugvorgang einzelne Saugergruppen über die Schalteinrichtungen (114) von der Saugeinrichtung (112) getrennt sind, dass eine Saugergruppe eine vorgegebene Mehrzahl einzelner Sauger (104) umfasst und dass unterschiedliche Saugergruppen verschiedene einzelne Sauger (104) umfassen.

3. Verfahren nach einem der Ansprüche 1 oder 2, **dadurch gekennzeichnet, dass** in einem Positioniervorgang wenigstens ein einzeln ansteuerbarer Sauger (104), der nicht mit der Unterdruckeinheit (112) verbunden ist, einzeln mit der Unterdruckeinheit (112) verbunden wird, und ein Unterdruck-Unterschied zwischen einem ersten Unterdruckwert und einem zweiten Unterdruckwert bestimmt wird, wobei der erste Unterdruckwert erfasst wird, wenn der wenigstens eine einzeln ansteuerbarer Sauger (104) nicht mit der Unterdruckeinheit (112) verbunden ist, und wobei der zweite Unterdruckwert erfasst wird, wenn der wenigstens eine einzeln ansteuerbare Sauger (104) mit der Unterdruckeinheit (112) verbunden ist.

4. Verfahren nach Anspruch 3, **dadurch gekennzeichnet, dass** ein einzelner Sauger (104) anschließend abhängig von dem Unterdruck-Unterschied von der Unterdruckeinheit (112) getrennt oder die Verbindung aufrechterhalten wird.

5. Verfahren nach einem der Ansprüche 3 oder 4, **dadurch gekennzeichnet, dass** wenn der Unterdruck-Unterschied einen Schwellwert überschreitet alle Sauger (104) von der Unterdruckeinheit (112) getrennt wird, die Handhabungseinrichtung (102) von einer ersten Position bezüglich des Werkstücks (108) in eine zweite Position des Werkstücks (108) bewegt wird, die von der ersten Position verschieden ist, und der Positioniervorgang wiederholt wird, bis ein erfasster Unterdruckwert einen Soll-Unterdruckwert erreicht.

6. Verfahren nach einem der Ansprüche 3 bis 5, **dadurch gekennzeichnet, dass** der Positioniervorgang wenigstens einen Rüttelvorgang umfasst, in dem die Handhabungseinrichtung (102) bezüglich des Werkstücks (108) bewegt wird, während die Sauger (104) das Werkstück (108) ansaugen.

7. Verfahren nach einem der vorherigen Ansprüche, **dadurch gekennzeichnet, dass** eine Werkstückposition bezüglich der Handhabungseinrichtung (102) mittels eines mechanischen oder elektrischen Sensors, insbesondere eines Lichttasters, Ultraschallsensors oder eines mechanischen Grenztasters, erfasst wird, und eine Saugerpositionierung auf dem Werkstück (108) abhängig von der ermittelten Werkstückposition angepasst wird.

8. Verfahren nach einem der Ansprüche 1 bis 6, **dadurch gekennzeichnet, dass** eine Werkstückposition bezüglich der Handhabungseinrichtung (102) mittels einer sensorischen Erfassung des Unterdrucks erfasst wird, wobei ein Korrekturverfahren ausgeführt wird, wenn der sensorisch erfasste Unterdruck einen Korrekturschwellwert unterschreitet.

9. Verfahren nach Anspruch 8, **dadurch gekennzeichnet, dass** ein erfasster Unterdruckwert mit einem Referenz-Unterdruck-Wert verglichen wird und abhängig vom Ergebnis des Vergleichs ein Zustand des Saugers (102) ermittelt wird, wobei der Referenz-Unterdruck-Wert entweder ein vorgegebener Soll-Wert für ein vorgegebenes Material des Werkstücks (108) oder ein während des Betriebs der Handhabungseinrichtung (102) mit dem Werkstück (108) ermittelter Soll-Wert ist.

10. Verfahren nach einem der Ansprüche 1 bis 8, **dadurch gekennzeichnet, dass** die Handhabungseinrichtung (102) bezüglich einer Referenzstelle (118) bewegbar ist, deren Oberfläche durch mindestens einen Sauger (104) greifbar ist, wobei die Handhabungseinrichtung (102) in eine Referenzposition bezüglich der Referenzstelle (118) bewegt wird um mit wenigstens einem Sauger (104) die Referenzstelle (118) zu greifen, wobei wenigstens ein Sauger (104) angesteuert wird, in der Referenzposition (120) die Referenzstelle (118) zu greifen, wobei in der Referenzposition (120) wenigstens ein Unterdruckwert erfasst wird, wobei der in der Referenzposition (120) erfasste Unterdruckwert mit einem Referenz-Unterdruck-Wert verglichen wird, wobei abhängig vom Ergebnis des Vergleichs ein Zustand des Saugers (104) ermittelt wird, und wobei der Referenz-Unterdruck-Wert entweder ein vorgegebener Soll-Wert oder ein während des Betriebs der Handhabungseinrichtung (102) ermittelter Soll-Wert ist.

11. Verfahren nach einem der vorherigen Ansprüche, **dadurch gekennzeichnet, dass** die Handhabungseinrichtung (102) an einem ersten Ende (122) eines Armes (124) bezüglich eines zweiten Endes (126) des Armes (124) mit vorgebbarer Geschwindigkeit beweglich angeordnet ist, wobei die Geschwindigkeit zur Bewegung der Handhabungseinrichtung (1029 bezüglich des zweiten Endes (126) des Armes (124) abhängig von einem erfassten Unterdruckwert vorgegeben wird.

12. Verfahren nach einem der vorherigen Ansprüche, **dadurch gekennzeichnet, dass** zu einem definierten Zeitpunkt ein automatisierter Selbsttest der Handhabungseinrichtung (102) durchführt wird, in dem die Handhabungseinrichtung (102) automatisiert auf mechanische oder elektrische Fehler geprüft wird, wobei die dafür notwendigen Bewegungen und Ansteuerungen des Arms (124) und der Handhabungseinrichtung (102) mittels einer Aktorik sowie eine Auswertung einer dafür eingesetzten Sensorik vollautomatisch stattfinden, indem ein Selbsttest durchgeführt wird und über rückgeführte Messwerte die Abweichung eines Ist-Zustands von einem Soll-Zustand überprüft wird, und dass die Abweichung innerhalb eines definierten Toleranzfensters automatisch durch Ansteuerung der Aktorik korrigiert wird, und dass eine Positionierung der Handhabungseinrichtung (102) an einer vorgegeben Referenzmessstelle erfolgt, wobei eine Erfassung eines Unterschieds zwischen dem Ist-Zustand und dem Soll-Zustand mit Hilfe mechanischer oder elektrischer Sensoren erfolgt.

13. Handhabungseinrichtung (102), insbesondere eine Saugtraverse, mit Saugern (104), die zum Greifen von Werkstücken in einer Ebene (106) angeordnet sind, wobei die Handhabungseinrichtung eine Steuereinrichtung (116), Saugleitungen (110), Schalteinrichtungen (114) und eine Saugeinrichtung (112) aufweist, wobei die Sauger (104) ausgebildet sind, ein Werkstück (108) mittels Unterdruck zu greifen, wobei die Sauger (104) über die Saugleitungen (110) mit der Saugeinrichtung (112) zum Steuern des Unterdrucks verbindbar sind, wobei die Sauger (104) einzeln oder in Gruppen durch Öffnen oder Verschließen wenigstens einer Saugleitung (110) der Saugleitungen (110) einzeln über die Schalteinrichtungen (114) wahlweise mit der Saugeinrichtung (112) verbindbar oder von der Saugeinrichtung (112) trennbar sind, und wobei die Steuereinrichtung (116) ausgebildet ist, eine oder mehrere der Schalteinrichtungen (114) zum wahlweisen Öffnen oder Verschließen abhängig von einem vorgebbaren Betriebsmodus der Handhabungseinrichtung (102) anzusteuern, **dadurch gekennzeichnet, dass** die Steuereinrichtung (116) ausgebildet ist, zumindest die Saugeinrichtung (112) und die Schalteinrichtung (114) in einem der Verfahren nach den Ansprüchen 1 bis 12 anzusteuern.

## Claims

1. Method for handling products that are flat at least in some portions by means of a handling device (102), in particular a suction traverse, comprising suction cups (104), which are arranged in a plane (106) in order to grip workpieces, the suction cups (104) being designed to grip a workpiece (108) by means of negative pressure, the suction cups (104) being connectable via suction lines (110) to a suction device (112) for controlling the negative pressure, the suction cups (104) being selectively connectable to the suction device (112) or separable from the suction device (112) individually or in groups by opening or closing at least one suction line (110) via switching devices (114), one or more of the switching devices (114) for selective opening or closing being actuated according to a specifiable operating mode of the handling device (102), individual suction cups (104) or suction cup groups which are separated from the suction device (112) via the switching devices (114) being connected, in a sequential suction process, individually one after the other to the suction device (112) via switching devices (114), until an entirety of the suction cups (102) of the handling device (102) or a maximum number thereof that is dependent on the tool size suctions the workpiece (108), **characterized in that** a workpiece (108) is suctioned, during a first suction process, by an entirety of the suction cups (104) or a maximum number thereof that is dependent on the workpiece size, and then checks whether an instantaneous negative pressure value falls below a target negative pressure value, a second suction process then being carried out if the instantaneous negative pressure value falls below the target negative pressure value, the second suction process comprising the sequential suction process.

2. Method according to claim 1, **characterized in that** in the sequential suction process, individual suction cup groups are separated from the suction device (112) via the switching devices (114), **in that** a suction cup group comprises a specified plurality of individual suction cups (104), and **in that** different suction cup groups comprise different individual suction cups (104).

3. Method according to one of claims 1 or 2, **characterized in that** in a positioning process, at least one individually actuable suction cup (104) which is not connected to the negative pressure unit (112) is connected individually to the negative pressure unit (112), and a negative pressure difference between a first negative pressure value and a second negative pressure value is determined, the first negative pressure value being detected when the at least one individually actuable suction cup (104) is not connected to the negative pressure unit (112), and the second negative pressure value being detected when the at least one individually actuable suction cup (104) is connected to the negative pressure unit (112).

4. Method according to claim 3, **characterized in that** an individual suction cup (104) is subsequently separated from the negative pressure unit (112) or the connection is maintained depending on the negative pressure difference.

5. Method according to one of claims 3 or 4, **characterized in that** if the negative pressure difference exceeds a threshold value, all suction cups (104) are separated from the negative pressure unit (112), the handling device (102) is moved from a first position relative to the workpiece (108) into a second position of the workpiece (108) that is different from the first position, and the positioning process is repeated until a detected negative pressure value reaches a target negative pressure value.

6. Method according to one of claims 3 to 5, **characterized in that** the positioning process comprises at least one vibration process in which the handling device (102) is moved relative to the workpiece (108) while the suction cups (104) suction the workpiece (108).

7. Method according to one of the preceding claims, **characterized in that** a workpiece position with respect to the handling device (102) is detected by means of a mechanical or electrical sensor, in particular a light scanner, ultrasonic sensor or a mechanical limit sensor, and suction cup positioning on the workpiece (108) is adjusted according to the determined workpiece position.

8. Method according to one of claims 1 to 6, **characterized in that** a workpiece position with respect to the handling device (102) is detected by means of sensor detection of the negative pressure, a correction method being implemented if the sensor-detected negative pressure falls below a correction threshold value.

9. Method according to claim 8, **characterized in that** a detected negative pressure value is compared with a reference negative pressure value and, depending on the result of the comparison, a state of the suction cup (102) is determined, the reference negative pressure value being either a specified target value for a specified material of the workpiece (108) or a target value determined during operation of the handling device (102) together with the workpiece (108).

10. Method according to one of claims 1 to 8, **characterized in that** the handling device (102) is movable with respect to a reference point (118), the surface of which can be gripped by at least one suction cup (104), the handling device (102) being moved into a reference position with respect to the reference point (118) in order to grip the reference point (118) by means of at least one suction cup (104), at least one suction cup (104) being actuated to grip the reference point (118) in the reference position (120), at least one negative pressure value being detected in the reference position (120), the negative pressure value detected in the reference position (120) being compared with a reference negative pressure value, a state of the suction cup (104) being determined depending on the result of the comparison, and the reference negative pressure value being either a specified target value or a target value determined during operation of the handling device (102).

11. Method according to one of the preceding claims, **characterized in that** the handling device (102) is arranged on a first end (122) of an arm (124) so as to be movable with respect to a second end (126) of the arm (124) at a specifiable speed, the speed for moving the handling device (1029 with respect to the second end (126) of the arm (124) being specified according to a detected negative pressure value.

12. Method according to one of the preceding claims, **characterized in that** an automated self-test of the handling device (102) is carried out at a defined point in time, in which self-test the handling device (102) is automatically checked for mechanical or electrical faults, the necessary movements and actuations of the arm (124) and of the handling device (102) by means of an actuator system and an evaluation of a sensor system used for this purpose taking place fully automatically by a self-test being carried out and the deviation of an actual state from a target state being checked by means of feedback measured values, and **in that** the deviation is automatically corrected within a defined tolerance window by actuating the actuator system, and **in that** a positioning of the handling device (102) takes place at a specified reference measurement point, detection of a difference between the actual state and the target state taking place by means of mechanical or electrical sensors.

13. Handling device (102), in particular a suction traverse, comprising suction cups (104), which are arranged in a plane (106) in order to grip workpieces, the handling device having a control device (116), suction lines (110), switching devices (114) and a suction device (112), the suction cups (104) being designed to grip a workpiece (108) by means of negative pressure, the suction cups (104) being connectable via the suction lines (110) to the suction device (112) for controlling the negative pressure, the suction cups (104), individually or in groups, being selectively connectable to the suction device (112) or separable from the suction device (112) by opening or closing at least one suction line (110) of the suction lines (110) individually via the switching devices (114), and the control device (116) being designed to actuate, according to a specifiable operating mode of the handling device (102), one or more of the switching devices (114) for selective opening or closing, **characterized in that** the control device (116) is designed to control at least the suction device (112) and the switching device (114) in one of the methods according to claims 1 to 12.

## Revendications

1. Procédé pour la manipulation de marchandises plates au moins sur certaines parties au moyen d'un dispositif de manipulation (102), en particulier d'une traverse d'aspiration, avec des ventouses (104), qui pour saisir des pièces sont disposées dans un plan (106), dans lequel les ventouses (104) sont réalisées pour saisir une pièce (108) au moyen d'une pression négative, dans lequel les ventouses (104) peuvent être reliées à un dispositif d'aspiration (112) par l'intermédiaire de conduites d'aspiration (110) pour commander la pression négative, dans lequel les ventouses (104) par ouverture ou fermeture d'au moins une conduite d'aspiration (110) peuvent sélectivement être reliées au dispositif d'aspiration (112) ou être séparées du dispositif d'aspiration (112) individuellement ou en groupes par l'intermédiaire de dispositifs de commutation (114), dans lequel un ou plusieurs des dispositifs de commutation (114) pour l'ouverture ou la fermeture sélective sont commandés en fonction d'un mode de fonctionnement pouvant être prédéfini du dispositif de manipulation (102), dans lequel dans un processus d'aspiration séquentiel différentes ventouses (104) ou groupes de ventouses, qui sont séparés du dispositif d'aspiration (112) par l'intermédiaire des dispositifs de commutation (114), sont reliés au dispositif d'aspiration (112) individuellement les unes après les autres par l'intermédiaire de dispositifs de commutation (114), jusqu'à ce qu'une totalité ou un nombre maximal de ventouses (102) du dispositif de manipulation (102) dépendant de la taille de la pièce aspire la pièce (108), **caractérisé en ce qu'**une pièce (108) est aspirée par une totalité ou un nombre maximal de ventouses (104) dépendant de la taille de la pièce lors d'un premier processus d'aspiration, et ensuite on vérifie si une valeur de pression négative momentanée passe au-dessous d'une valeur de pression négative de consigne, dans lequel un deuxième processus d'aspiration est alors exécuté lorsque la valeur de pression négative momentanée passe au-dessous de la valeur de pression négative de consigne, dans lequel le deuxième processus d'aspiration comprend le processus d'aspiration séquentiel.

2. Procédé selon la revendication 1, **caractérisé en ce que** dans le processus d'aspiration séquentiel des groupes de ventouses individuels sont séparés du dispositif d'aspiration (112) par l'intermédiaire des dispositifs de commutation (114), qu'un groupe de ventouses comprend une pluralité prédéfinie de ventouses (104) individuelles et que différents groupes de ventouses comprennent des ventouses (104) individuelles différentes.

3. Procédé selon l'une quelconque des revendications 1 ou 2, **caractérisé en ce que** dans un processus de positionnement au moins une ventouse (104) pouvant être commandée individuellement, qui n'est pas reliée à l'unité de pression négative (112), est reliée individuellement à l'unité de pression négative (112), et une différence de pression négative entre une première valeur de pression négative et une deuxième valeur de pression négative est déterminée, dans lequel la première valeur de pression négative est acquise lorsque la au moins une ventouse (104) pouvant être commandée individuellement n'est pas reliée à l'unité de pression négative (112), et dans lequel la deuxième valeur de pression négative est acquise lorsque la au moins une ventouse (104) pouvant être commandée individuellement est reliée à l'unité de pression négative (112).

4. Procédé selon la revendication 3, **caractérisé en ce qu'**une ventouse (104) individuelle en fonction de la différence de pression négative est ensuite séparée de l'unité de pression négative (112) ou la liaison est maintenue.

5. Procédé selon l'une quelconque des revendications 3 ou 4, **caractérisé en ce que** lorsque la différence de pression négative dépasse une valeur de seuil toutes les ventouses (104) sont séparées de l'unité de pression négative (112), le dispositif de manipulation (102) est déplacé d'une première position par rapport à la pièce (108) dans une deuxième position de la pièce (108), qui est différente de la première position, et le processus de positionnement est répété jusqu'à ce qu'une valeur de pression négative acquise atteigne une valeur de pression négative de consigne.

6. Procédé selon l'une quelconque des revendications 3 à 5, **caractérisé en ce que** le processus de positionnement comprend au moins un processus de secousse, dans lequel le dispositif de manipulation (102) est déplacé par rapport à la pièce (108), pendant que les ventouses (104) aspirent la pièce (108) .

7. Procédé selon l'une quelconque des revendications précédentes, **caractérisé en ce qu'**une position de la pièce par rapport au dispositif de manipulation (102) est acquise au moyen d'un capteur mécanique ou électrique, en particulier d'un détecteur optique, capteur ultrasonore ou d'un interrupteur de fin de course mécanique, et un positionnement de la ventouse sur la pièce (108) est adapté en fonction de la position de la pièce établie.

8. Procédé selon l'une quelconque des revendications 1 à 6, **caractérisé en ce qu'**une position de la pièce par rapport au dispositif de manipulation (102) est acquise au moyen qu'une acquisition sensorielle de la pression négative, dans lequel un procédé de correction est mis en oeuvre lorsque la pression négative acquise de manière sensorielle passe au-dessous d'une valeur de seuil de correction.

9. Procédé selon la revendication 8, **caractérisé en ce qu'**une valeur de pression négative acquise est comparée à une valeur de pression négative de référence et en fonction du résultat de la comparaison un état de la ventouse (102) est établi, dans lequel la valeur de pression négative de référence est soit une valeur de consigne prédéfinie pour un matériau prédéfini de la pièce (108) soit une valeur de consigne établie pendant le fonctionnement du dispositif de manipulation (102) avec la pièce (108).

10. Procédé selon l'une quelconque des revendications 1 à 8, **caractérisé en ce que** le dispositif de manipulation (102) peut être déplacé par rapport à un point de référence (118), dont la surface peut être saisie par au moins une ventouse (104), dans lequel le dispositif de manipulation (102) est déplacé dans une position de référence par rapport au point de référence (118) afin de saisir le point de référence (118) avec au moins une ventouse (104), dans lequel au moins une ventouse (104) est commandée pour saisir le point de référence (118) dans la position de référence (120), dans lequel dans la position de référence (120) au moins une valeur de pression négative est acquise, dans lequel la valeur de pression négative acquise dans la position de référence (120) est comparée à une valeur de pression négative de référence, dans lequel en fonction du résultat de la comparaison un état de la ventouse (104) est établi, et dans lequel la valeur de pression négative de référence est soit une valeur de consigne prédéfinie soit une valeur de consigne établie pendant le fonctionnement du dispositif de manipulation (102).

11. Procédé selon l'une quelconque des revendications précédentes, **caractérisé en ce que** le dispositif de manipulation (102) est disposé de manière mobile à une première extrémité (122) d'un bras (124) par rapport à une deuxième extrémité (126) du bras (124) à une vitesse pouvant être prédéfinie, dans lequel la vitesse pour le déplacement du dispositif de manipulation (102) par rapport à la deuxième extrémité (126) du bras (124) est prédéfinie en fonction d'une valeur de pression négative acquise.

12. Procédé selon l'une quelconque des revendications précédentes, **caractérisé en ce qu'**à un moment défini un autotest automatisé du dispositif de manipulation (102) est mis en oeuvre, dans lequel le dispositif de manipulation (102) est contrôlé de manière automatisée à la recherche de défauts mécaniques ou électriques, dans lequel les mouvements et commandes du bras (124) et du dispositif de manipulation (102) nécessaires à cela ont lieu de manière entièrement automatique au moyen d'un système d'actionnement ainsi qu'une évaluation d'un système de détection utilisé pour cela, du fait qu'un autotest est mis en oeuvre et par l'intermédiaire de valeurs de mesure renvoyées l'écart entre un état réel et un état de consigne est contrôlé, et que l'écart à l'intérieur d'une fenêtre de tolérance définie est corrigé de manière automatique par commande du système d'actionnement, et qu'un positionnement du dispositif de manipulation (102) s'effectue à un point de mesure de référence prédéfini, dans lequel une acquisition d'une différence entre l'état réel et l'état de consigne s'effectue à l'aide de capteurs mécaniques ou électriques.

13. Dispositif de manipulation (102), en particulier traverse d'aspiration, avec des ventouses (104), qui pour saisir des pièces sont disposées dans un plan (106), dans lequel le dispositif de manipulation présente un dispositif de commande (116), des conduites d'aspiration (110), des dispositifs de commutation (114) et un dispositif d'aspiration (112), dans lequel les ventouses (104) sont réalisées pour saisir une pièce (108) au moyen d'une pression négative, dans lequel les ventouses (104) peuvent être reliées au dispositif d'aspiration (112) par l'intermédiaire des conduites d'aspiration (110) pour la commande de la pression négative, dans lequel les ventouses (104) par ouverture ou fermeture d'au moins une conduite d'aspiration (110), des conduites d'aspiration (110) individuellement par l'intermédiaire des dispositifs de commutation (114) peuvent sélectivement être reliées au dispositif d'aspiration (112) ou séparées du dispositif d'aspiration (112) individuellement ou en groupes, et dans lequel le dispositif de commande (116) est réalisé pour commander un ou plusieurs des dispositifs de commutation (114) pour l'ouverture ou la fermeture sélective en fonction d'un mode de fonctionnement pouvant être prédéfini du dispositif de manipulation (102), **caractérisé en ce que** le dispositif de commande (116) est réalisé pour commander au moins le dispositif d'aspiration (112) et le dispositif de commutation (114) dans un des procédés selon les revendications 1 à 12.
